Europäisches Patentamt

European Patent Office

Office européen des brevets

(11) Publication number: **0 051 052**
**B1**

# (12) EUROPEAN PATENT SPECIFICATION

(45) Date of publication of patent specification: **18.12.85**

(21) Application number: **81850177.7**

(22) Date of filing: **02.10.81**

(51) Int. Cl.⁴: **G 01 N 1/06**

(54) **Microtome.**

(30) Priority: **27.10.80 SE 8007527**

(43) Date of publication of application:
**05.05.82 Bulletin 82/18**

(45) Publication of the grant of the patent:
**18.12.85 Bulletin 85/51**

(84) Designated Contracting States:
**AT BE CH DE FR GB IT LI NL**

(56) References cited:
**FR-A-2 373 787**
**US-A-3 691 889**

**SOVIET JOURNAL OF INSTRUMENTATION AND CONTROL, (translated from the Russian: Pribory i sistemyupravleniya.), vol. 10, October 1968, OXFORD (GB) I.I. CHEMERIS et al.: "UMTP-1 Ultramicrotome with piezoelectric feed" pages 63, 64**

(73) Proprietor: **LKB-Produkter AB**
**Box 305**
**S-161 26 Bromma (SE)**

(72) Inventor: **Forsström, Bo**
**Orionvägen 26**
**S-175 60 Järfälla (SE)**
Inventor: **Luniewski, Tomas**
**Grevgatan 40**
**S-114 53 Stockholm (SE)**
Inventor: **Wikefelt, Per**
**Säningsvägen 96**
**S-175 45 Järfälla (SE)**

(74) Representative: **Sandström, Sven et al**
**LKB-Produkter AB Box 305**
**S-161 26 Bromma (SE)**

Courier Press, Leamington Spa, England.

## Description

The present invention refers to a microtome comprising a knife, a holder for a specimen to be cut by the knife, and means for imparting both a cutting and a feeding movement to the holder, said holder being connected to a frame via a crossed spring suspension.

In microtomes and ultramicrotomes, respectively, which are instruments for producing sample cuts to be studied in a microscope or an electron microscope, respectively, the sample cuts are produced by moving the sample block towards a knife edge from which the sample cut is cut off. This movement is repeated several times, the sample block being displaced between each cut, the size of this displacement being dependent upon the desired thickness of the cut.

In order to obtain the cutting movement the sample block is usually attached to one end of a long heavy arm, the opposite end of which can be tilted around an axis parallel to the knife edge by means of a crossed spring known from e.g. FR—A—2 373 787. The long arm thereby makes the instrument long and space consuming. Furthermore, the cutting is carried out by means of letting the arm fall down subject to the gravity forces which means that the arm must be relatively heavy in order to obtain sufficient cutting forces.

It is an object of the present invention to provide a microtome in which the above mentioned drawbacks are eliminated. Thus, according to the invention it will be possible to design a microtome having a low weight and a small volume and in which the cutting forces can be made arbitrarily large.

This is accomplished in that the microtome according to the invention has been given the characterizing features defined in claim 1.

The invention will now be explained in detail, reference being made to the enclosed drawing on which:

Fig. 1 schematically shows a microtome according to the invention;

Fig. 2 shows a specific embodiment of the microtome according to the invention; and

Fig. 3 shows an embodiment of a crossed leaf spring link to be used in the microtome according to the invention.

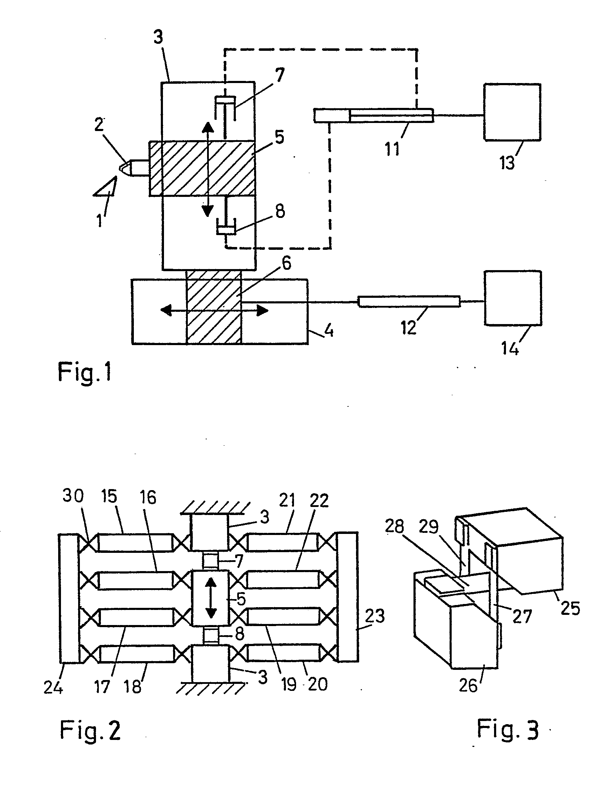

In Fig. 1 which schematically shows a microtome according to the invention, reference numeral 1 denotes a knife towards the edge of which a specimen block 2 is displaced by means of a frame 3 according to the invention. The frame 3 is provided with a vertically movable holder 5 for the specimen block 2, which is actuated by two hydraulic or pneumatic driving units 7 and 8 via a driving unit 11 containing a plunger the position of which is controlled by a stepping motor 13. For feeding the specimen 2 the frame 3 is located on and attached to a horizontally movable part 6 of a fixed feeding unit 4. The part 6 is displaceable by means of a feeding screw 12 which is controlled by a stepping motor 14.

Fig. 2 shows an embodiment of how the holder 5 is suspended in a number of crossed leaf spring links 30 in order to obtain a straight-line cutting movement of the sample holder 5. As apparent from Fig. 2 the specimen holder 5 is via four crossed leaf spring links connected with four rigid arms 16, 17, 19, 22 which via further crossed leaf spring links and two vertical side pieces 23, 24 are connected to the frame 3. This type of crossed leaf spring arrangement is also suitable for the feeding movement, i.e. the fixed feeding unit 4 in Fig. 1.

In Fig. 3 an embodiment of the crossed leaf spring links 30 in Fig. 2 is shown. As shown in Fig. 3 two arms 25 and 26 are united via three leaf springs 27, 28 and 29.

## Claims

1. Microtome comprising a knife (1), a holder (5) for a specimen (2) to be cut by the knife (1) and means (7, 8, 12) for imparting both a cutting and a feeding movement to said holder (5), said holder being connected to a frame (3) via a crossed spring suspension, characterized in that, to allow a straight-line cutting movement, the holder (5) is suspended in the frame (3) between two side pieces (23, 24) by first pairs of parallel arms (16, 17, 19, 22) connected to the holder (5) and each respective side piece (23, 24), and that second pairs of arms (15, 18, 20, 21), being parallel to said first pairs of arms (16, 17, 19, 22), interconnect said side pieces (23, 24) with the frame (3), each said arm (15—22) of said first and second pairs being connected to the holder (5) or, respectively, to the frame (3) and the respective side piece (23, 24) by crossed leaf springs (30).

2. Microtome according to claim 1, characterized in that, to allow the feeding movement, the frame (3) is connected to a feeding unit (4) via a suspension arrangement similar to the arrangement of Claim 1 between the holder (5) and the frame (3).

## Patentansprüche

1. Mikrotom mit einem Messer (1), einem Halter (5) für ein von dem Messer zu schneidendes Objekt (2) und Mitteln (7, 8, 12), die dem Halter (5) eine Schneid- und Zuführbewegung erteilen, wobei der Halter über eine Aufhängung mit gekreuzten Federn mit einem Rahmen (3) verbunden ist, dadurch gekennzeichnet, daß zum Ermöglichen einer geradlinigen Schneidbewegung der Halter (5) im Rahmen (3) zwischen zwei Seitenteilen (23, 24) mittels erster Paare paralleler Arme (16, 17, 19, 22), die am Halter (5) und einem jeweiligen Seitenteil (23, 24) befestigt sind, aufgehängt ist, und daß zweite Paare Arme (15, 18, 20, 21), die mit den ersten Paaren Arme (16, 17, 19, 22) parallel verlaufen, die Seitenteile mit den Rahmen (3) verbinden, wobei jeder der Arme (15 bis 22) der ersten und zweiten Paare mittels gekreuzter Blattfedern (30) mit dem Halter (5) bzw. dem Rahmen (3) und dem jeweiligen Seitenteil (23, 24) verbunden ist.

2. Mikrotom nach Anspruch 1, dadurch gekennzeichnet, daß zum Ermöglichen der Zuführbewegung der Rahmen (3) über eine Aufhängungsanordnung, die der Anordnung des Anspruchs 1 zwischen dem Halter (5) und dem Rahmen (3) ähnlich ist, mit einer Zuführeinrichtung (4) verbunden ist.

**Revendications**

1. Microtome comprenant un couteau (1), un support (5) pour un spécimen (2) à couper par le couteau (1) et des moyens (7, 8, 12) destinés à communiquer à la fois un mouvement de coupe et un mouvement d'avance audit support (5), ledit support étant relié à un bâti (3) par une suspension à ressorts croisés, caractérisé en ce que, pour permettre un mouvement de coupe en ligne droite, le support (5) est suspendu dans le bâti (3) entre deux pièces latérales (23, 24) par des premières paires de bras parallèles (16, 17, 19, 22) reliées au support (5) et à chaque pièce latérale respective (23, 24), et en ce que des secondes paires de bras (15, 18, 20, 21) parallèles auxdites premières paires de bras (16, 17, 19, 22), relient lesdites pièces latérales (23, 24) au bâti (3), chacun desdits bras (15—22) desdites première et seconde paires étant relié au support (5) ou, respectivement, au bâti (3) et à la pièce latérale (23, 24) par des ressorts à lames croisées (30).

2. Microtome selon la revendication 1, caractérisé en ce que, pour permettre le mouvement d'avance, le bâti (3) est relié à une unité (4) d'avance par l'intermédiaire d'un agencement de suspension similaire à l'agencement de la revendication 1, entre le support (5) et le bâti (3).

Fig.1

Fig.2

Fig.3